Europäisches Patentamt

European Patent Office

Office européen des brevets

(19)

(11) **EP 0 490 440 B1**

(12) **FASCICULE DE BREVET EUROPEEN**

(45) Date de publication et mention
de la délivrance du brevet:
**24.06.1998 Bulletin 1998/26**

(51) Int Cl.⁶: **H04J 3/16**

(21) Numéro de dépôt: **91203193.7**

(22) Date de dépôt: **06.12.1991**

(54) **Dispositif pour transmettre sur un multiplex temporel différents canaux ayant des débits binaires divers**

**Anordnung zur Übertragung von mehreren Kanälen mit verschiedenen Bitraten über einer zeitmultiplexierten Übertragungsstrecke**

Circuit for the transmission of different channels with different bitrates over a time diversion multiplexed link

(84) Etats contractants désignés:
**DE FR GB SE**

(30) Priorité: **14.12.1990 FR 9015691**

(43) Date de publication de la demande:
**17.06.1992 Bulletin 1992/25**

(73) Titulaires:
- **PCE**
  **75013 Paris (FR)**
  Etats contractants désignés:
  **FR**
- **COMPAGNIE DES SIGNAUX**
  **75116 Paris (FR)**
  Etats contractants désignés:
  **DE GB SE**

(72) Inventeur: **dela Bourdonnaye Philippe, Société Civile S.P.I.D.**
  **F-75008 Paris (FR)**

(74) Mandataire: **Chameroy, Claude et al**
  **c/o Cabinet Malémont**
  **42, avenue du Président Wilson**
  **75116 Paris (FR)**

(56) Documents cités:
  **EP-A- 0 068 595**

- **INSTITUTE OF ELECTRICAL AND ELECTRONICS ENGINEERS. INTERNATIONAL CONFERENCE ON COMMUNICATIONS. vol. S.39, 11 Juin 1973, SEATTLE (US) pages 18 - 23; T. SAITO ET AL.: 'Data switching system of various data speed by high speed uniformly spaced'**

**Description**

La présente invention concerne un dispositif de transmission par multiplexage temporel présentant un débit binaire dTDM de différents canaux C1, ..., CN ayant respectivement des débits binaires

$$d1, \ldots, dN \left( \sum_{i=1}^{N} di \leq dTDM \right),$$

dispositif comportant une partie émission formée d'un circuit multiplexeur pour donner d'une part, accès aux données entrantes desdits canaux et d'autre part, accès à des données de service de débit dS sur le multiplex sous la commande d'un premier organe répartiteur de canaux et une partie réception formée d'un circuit démultiplexeur pour fournir des données sortantes desdits canaux à partir dudit multiplex sous la commande d'un deuxième organe répartiteur de canaux synchronisé sur le premier.

L'invention concerne aussi un système de transmission par multiplexage temporel présentant un débit binaire dTDM, pour transmettre différents canaux C1, ..., CN ayant respectivement des débits binaires

$$d1, \ldots, dN \left( \sum_{i=1}^{N} di \leq dTDM \right)$$

et d'au moins un tel dispositif.

Ce genre de dispositif trouve des applications où différents circuits utilisateurs travaillant à différents rythmes doivent être raccordés par l'intermédiaire d'une ligne multiplexée au genre défini par la recommandation X58 du CCITT.

La demande de brevet allemand 36 19 371 décrit un tel dispositif où l'accès au multiplex des différents canaux est accordé au prorata de leur débit. Cependant dans cette demande rien n'est dit en ce qui concerne la manière dont cet accès est accordé. On peut craindre que ce dispositif connu soit mal adapté aux cas où le débit d'un ou de plusieurs canaux change.

Le document "Data switching system of various data speed by high speed uniformly spaced data sampling" de T. Saito et al. paru dans INSTITUTE OF ELECTRICAL AND ELECTRONICS ENGINEERS, INTERNATIONAL CONFERENCE ON COMMUNICATIONS, vol.S.39, du 11 Juin 1973, Seattle, US, pages 18-23 décrit un accès basé sur une arborescence, tandis que le document de brevet EP-A-O 068 595 fait appel à une combinaison de deux mémoires pour éviter de perdre des informations lors d'un changement de débit des canaux à transmettre.

La présente invention propose un dispositif du genre mentionné dans le préambule, dans lequel l'attribution des canaux s'effectue simplement et qui est apte à maintenir une bonne qualité de service même quand il est proposé un changement de débit pour un ou plusieurs canaux.

Pour cela, un tel dispositif est remarquable en ce que les organes répartiteurs des canaux sont conçus pour répartir les canaux de la manière suivante en se basant sur un débit dPG qui est du plus grand commun diviseur des débits des données à transmettre, y compris le débit des données de service :

- détermination du ou des plus grands débits dMAX parmi les di et dS,
- calcul d'un incrément $\Delta_i = di/dMAX$,
- détermination d'un débit de bourrage dX :

$$dX = dTDM - \left[ \left( \sum_{i=1}^{N} di \right) + dS \right]$$

- confection d'un tableau où pour chaque information de débit di et à chaque ligne j on calcule $j\,\Delta_i$, $j\,\Delta S$, $j\,\Delta X$ jusqu'à ce que chaque quantité dépasse une valeur VS :

$$VS = 1 + \varepsilon,$$

- l'accès du multiplex est donné au canal pour les valeurs de i :

$$j.\Delta_i > kVS + \varepsilon$$

où k est un entier s'incrémentant chaque fois que l'accès est donné au multiplex, et où $\varepsilon$ est une valeur fixe égale, de préférence, à 0.

La description suivante en regard des dessins annexés, le tout donné à titre d'exemple non limitatif, fera bien comprendre comment l'invention peut être réalisée.

La figure 1 représente un dispositif conforme à l'invention.

La figure 2 montre un changement de structure de trame dans le cas où un canal change de rythme.

La figure 3 montre un mode de réalisation préféré des répartiteurs de canaux.

La figure 4 est un organigramme expliquant le fonctionnement des répartiteurs.

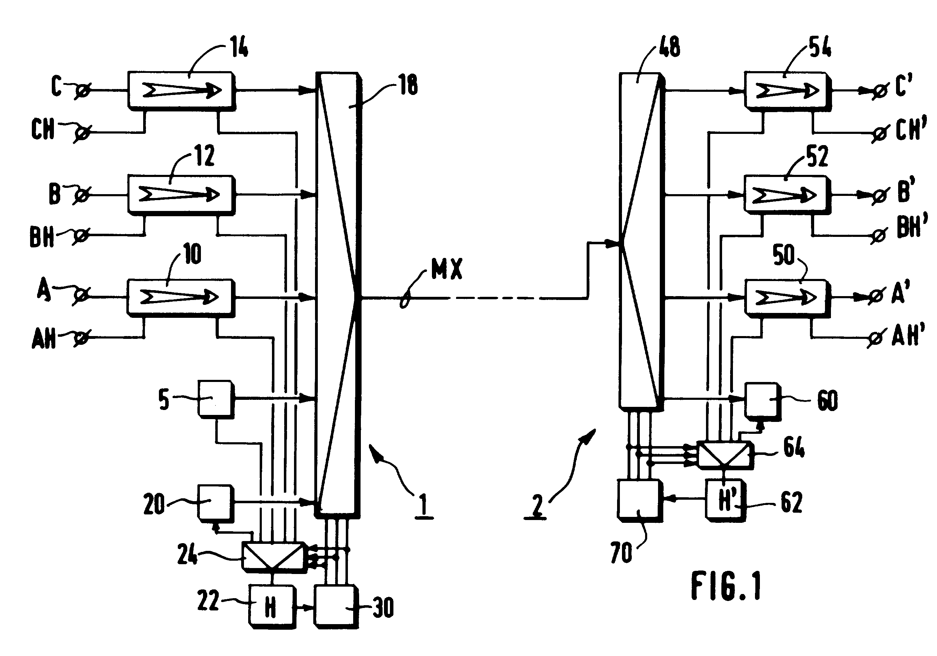

Le dispositif montré à la figure 1 est formé d'une partie émission 1 et d'une partie réception 2.

La partie 1 est munie d'accès A, B, C qui reçoivent des informations selon des débits divers d(A), d(B), et d(C). Par exemple on reçoit

en A :        des données selon un rythme de 1200 éléments binaires par seconde,
en B :        des données à un rythme de 2400 éléments/s, et
en C :        des données à un rythme de 4800 éléments/s.

De plus, un organe de gestion 5 doit transmettre des octets de service (synchronisation,...) selon un rythme de 200 eb/s avec des débits référencés par dS1 et dS2.

Toutes ces données sont transmises au moyen d'une ligne MX selon un multiplex par octet offrant une vitesse de transmission de 9600 éléments/s. Soit dTDM, ce débit.

Pour effectuer ce multiplexage on a prévu plusieurs moyens.

Des mémoires tampons 10, 12, 14 sont insérées entre les accès A, B, C et les entrées d'un multiplexeur 18. A d'autres entrées de ce multiplexeur sont reliées une sortie de l'organe de gestion 5 et d'un organe d'éléments de bourrage 20. Les mémoires, de type FIFO (première donnée entrée, première donnée sortie) sont inscrites au rythme d'horloge appliqué respectivement à des accès d'horloge AH, BH et CH. Elles sont lues au rythme d'une horloge 22 fixant le rythme du multiplex organisé sur la ligne MX. Ces signaux sont appliqués aux mémoires tampons 10, 12 et 14 par l'intermédiaire d'un distributeur de signaux 24. L'horloge 22 applique aussi ses signaux à un répartiteur de canaux 30 qui commande le multiplexeur 18 et, en concomitance, le répartiteur 24.

La partie réception comporte un démultiplexeur 48 dont l'entrée est reliée à la ligne MX et dont des sorties sont reliées à des bornes d'utilisation A', B' et C' par l'intermédiaire de mémoires tampons 50, 52 et 54 de même type que les mémoires 10, 12 et 14. Une autre sortie de ce multiplexeur est reliée à un organe de gestion de réception 60 pour traiter les informations de gestion reçues.

Les informations reçues sont emmagasinées dans les mémoires tampons 50, 52 et 54 au rythme d'une horloge de réception 62 dont les signaux sont appliqués à ces mémoires par l'intermédiaire d'un distributeur de signaux 64. L'horloge 62 est synchronisée par des moyens non représentés au rythme du multiplex transmis par la ligne MX. Un répartiteur de canaux 70 commande les positions du démultiplexeur 48 et du distributeur 64.

Les circuits utilisateurs connectés aux bornes A', B' et C' prélèvent les informations contenues dans les mémoires tampons 50, 52 et 54 en appliquant des signaux d'horloge respectivement aux accès AH', BH' et CH'.

L'organe répartiteur de canaux opère, conformément à l'invention, de la manière suivante en fonction du débit du multiplex d'une part, et des débits des circuits utilisateurs d'autre part.

1) Choix d'un PGCD (plus grand commun diviseur) de tous les débits possibles (en pratique ce PGCD = 200 b/s).

2) Détermination du plus grand débit parmi d(A), d(B), d(C), dS1 et dS2 soit dMAX.

3) Détermination du débit des bourrages d(X) :

$$d(X) = dTDM - \{[d(A)+d(B)+d(C)] - (dS1+dS2)\}$$

4) Calcul d'un incrément $\Delta A$, $\Delta B$, $\Delta C$, $\Delta S1$, $\Delta S2$ et $\Delta X$ par rapport à ce débit maximum, soit :

$$\Delta A = d(A)/dMAX$$
$$\Delta B = d(B)/dMAX$$
$$\Delta C = d(B)/dMAX$$
$$\Delta X = d(X)/dMAX$$
$$\Delta S1 = dS1/dMAX$$
$$\Delta S2 = dS2/dMAX$$

5) Confection d'un tableau où pour chaque canal et à chaque ligne i on a :

$i.\Delta A$, $i.\Delta B$, $i.\Delta C$, $i.\Delta X$ et $i.\Delta S$

6) Le choix du canal est déterminé par :

$$i.\Delta J = N + \varepsilon$$

$J = A, B, C, X, S1$ ou $S2$ où $N$ est un entier,

$\varepsilon$ est une valeur de préférence égale à zéro.

Le tableau ci-dessous donne un exemple de réalisation.

| | C=4800 | B=2400 | A=1200 | S1=200 | S2=200 | X=9600 -(C+B+A +S1+S2)=800 | |
|---|---|---|---|---|---|---|---|
| Δ | 1 | 0,5 | 0,25 | 0,0416 | 0,0416 | 0,1666 | |
| 1 | 1 | 0,5 | 0,25 | 0,0416 | 0,0416 | 0,1666 | C |
| 2 | 2 | 1 | 0,5 | 0,0833 | 0,0833 | 0,3333 | CB |
| 3 | 3 | 1,5 | 0,75 | 0,1250 | 0,1250 | 0,5000 | C |
| 4 | 4 | 2 | 1 | 0,1666 | 0,1666 | 0,6666 | CBA |
| 5 | 5 | 2,5 | 1,25 | 0,2083 | 0,2083 | 0,8333 | C |
| 6 | 6 | 3 | 1,50 | 0,2500 | 0,2500 | 1 | CBX |
| 7 | 7 | 3,5 | 1,75 | 0,2916 | 0,2916 | 1,1666 | C |
| 8 | 8 | 4 | 2 | 0,3333 | 0,3333 | 1,3333 | CBA |
| 9 | 9 | 4,5 | 2,25 | 0,3750 | 0,3750 | 1,500 | C |
| 10 | 10 | 5 | 2,50 | 0,4166 | 0,4166 | 1,666 | CB |
| 11 | 11 | 5,5 | 2,75 | 0,4583 | 0,4583 | 1,8333 | C |
| 12 | 12 | 6 | 3 | 0,500 | 0,500 | 2 | CBAX |
| . | . | . | . | . | . | . | |
| . | . | . | . | . | . | . | |
| 20 | 20 | 10 | 5 | 0,8333 | 0,8333 | 3,3333 | CBA |
| 21 | 21 | 10,5 | 5,25 | 0,8749 | 0,8749 | 3,5000 | C |
| 22 | 22 | 11 | 5,50 | 0,9166 | 0,9166 | 3,666 | CB |
| 23 | 23 | 11,5 | 5,75 | 0,9583 | 0,9583 | 3,8333 | C |
| 24 | 24 | 12 | 6 | 1 | 1 | 4 | CBAX S1 S2 |

FIN DE LA TRAME

| | 25 | 12,5 | | | | | |

d'où la trame :

C CB C CBA C CBX C CBA C CB C CBAX...CBA C CB C CBAX S1 S2.

Les octets de service S1 et S2 qui contiennent un motif de synchronisation de trame définissent la trame car le débit qui leur est affecté est le débit le plus faible et les autres débits ont pour PGCD ce même débit.

Dans ces octets de service on peut transmettre des informations indiquant un changement de débit pour les différents canaux par exemple, le canal B passe à 1200 bauds et le canal A à 2400, de sorte que la nouvelle trame découle de celle déjà décrite en permutant les lettres B et A.

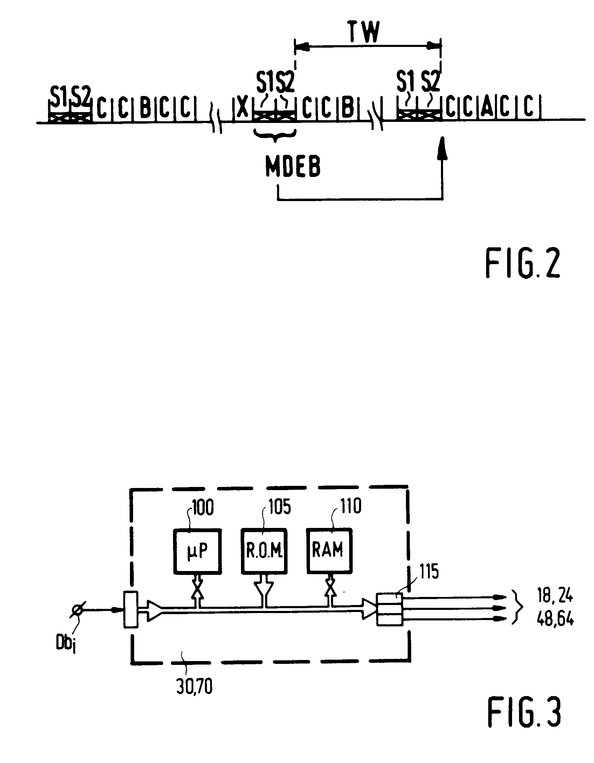

La figure 2 explicite ce changement de rythme. Les octets S1 et S2 contiennent les valeurs des débits à modifier, soit une information MDEB. Pendant le temps TW représentant une ou plusieurs trames suivantes, la nouvelle répartition est définie tant au niveau de l'organe 30 qu'au niveau de l'organe 70. A la fin de la durée TW la nouvelle répartition est assurée. On se rend compte que les canaux (le canal C dans cet exemple) dont le débit doit être assuré ne sont pas perturbés par le changement.

La figure 3 montre un mode de réalisation préféré des répartiteurs de canaux 30 et 70. Ces répartiteurs nécessitent en entrée la valeur des débits des différents canaux. Pour le répartiteur 30, ceux-ci sont directement disponibles. Pour le répartiteur 70, ceux-ci sont transmis ainsi qu'il a été dit.

Ces répartiteurs sont formés à partir d'un microprocesseur 100 autour duquel on trouve une mémoire morte 105 pour contenir notamment un programme de fonctionnement, une mémoire vive 110 utile pour l'exécution du programme et un registre de sortie 10 dans lequel est contenu le code de commande du multiplexeur 18 et un distributeur 24.

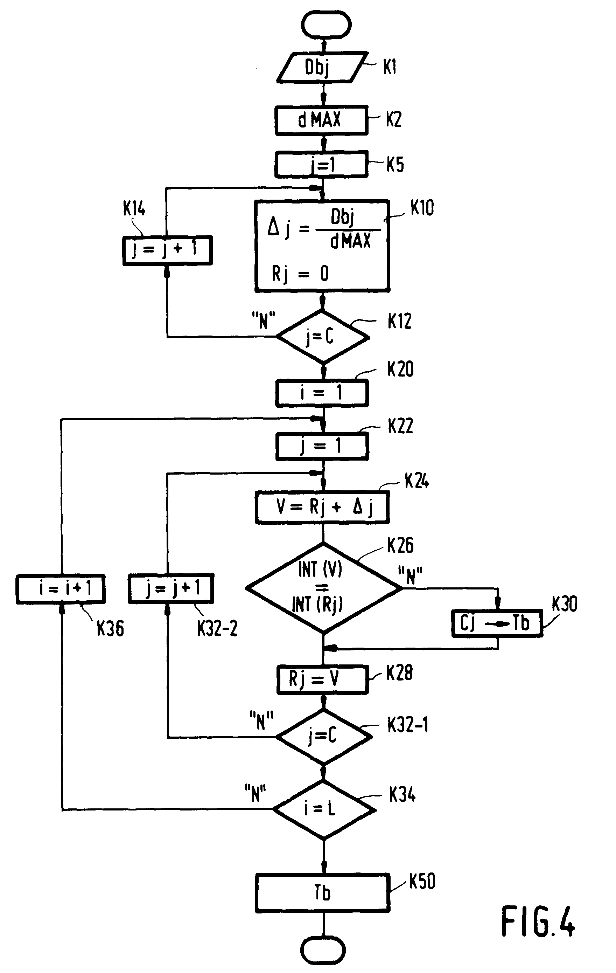

Le fonctionnement de ces répartiteurs est expliqué à l'aide de l'organigramme de la figure 4. On distingue deux phases de ce fonctionnement.

**1°) Phase d'établissement de la trame**

Cette phase débute par la lecture des différents débits demandés Dbj, pour les canaux 1 à c (case K1). Puis on détermine le ou les débits maximum dMAX (case K2). On initialise (case K5) une variable j qui va servir d'indice et qui est affectée à chaque numéro de canal. A la case K10 on détermine l'incrément $\Delta_j$ et on initialise aussi une variable intermédiaire $R_j$ utile pour la suite du programme. A la case K12 on teste la valeur de j ; si les canaux n'ont pas tous été traités, on incrémente d'une unité l'indice "j" (case K14) pour exécuter les opérations de la case K10 relatives au canal suivant. Si tous les canaux ont été traités, on passe à la case K20 où l'indice "i" est mis à "1". Cet indice correspond au numéro de ligne du tableau ci-dessus. A la case K22, qui suit, on re-initialise l'indice "i" relatif aux numéros de canaux. A la case K24, on évalue une qualité V qui représente la somme de l'incrément avec la valeur $R_j$. Puis on teste, case K26 si les parties entières de V et $R_j$ sont identiques, c'est-à-dire si elles n'ont pas été modifiées par l'incrément. Dans ce cas, $R_j$ prend la valeur de V case K28. Si l'incrément n'est pas le même la valeur de j qui représente le canal est mis dans une table de répartiteur Tb (case K30). Cette table est une mémoire pile faisant partie de la mémoire 110. Puis on teste (case K32) si toutes les variables $R_j$ ont été incrémentées pour tous les canaux, sinon on retourne à la case K24, après incrémentation de l'indice j case K32. Si tous les résultats Rj ont été traités pour tous les canaux, on teste (case K34) si les lignes du tableau ont été traitées L. Sinon, on incrémente l'indice i (case K36) avant de retourner à la case K22. Si le test de la case K34 est positif la première phase est terminée et la table Tb contient la structure de la trame.

**2°) Phase de connexion**

Cette phase, indiquée à la case K50 consiste à lire la table Tb et à disposer les codes relatifs aux différents canaux dans le registre 115.

**Revendications**

1. Dispositif de transmission par multiplexage temporel présentant un débit binaire dTDM de différents canaux C1, ..., CN ayant respectivement des débits binaires

$$d1, \ \ldots, \ dN \left( \sum_{i=1}^{N} di \leq dTDM \right),$$

ce dispositif comportant une partie émission (1) formée d'un circuit multiplexeur (18) pour donner d'une part, accès aux données entrantes desdits canaux et d'autre part, accès à des données de service de débit dS sur le multiplex sous la commande d'un premier organe répartiteur de canaux (30) et une partie réception (2) formée d'un circuit démultiplexeur (48) pour fournir des données sortantes desdits canaux à partir dudit multiplex sous la commande d'un deuxième organe répartiteur de canaux (70) synchronisé sur le premier, caractérisé en ce que les organes répartiteurs de canaux (30, 70) sont conçus pour répartir les canaux de la manière suivante en se basant sur un débit dPG qui est le plus grand commun diviseur des débits des données à transmettre, y compris le débit des données de service :

- détermination du ou des plus grands débits dMAX parmi les di et dS,
- calcul d'un incrément $\Delta_I = di/dMAX$,
- détermination d'un débit de bourrage dX :

$$dX = dTDM - \left[ \left( \sum_{i=1}^{N} di \right) + dS \right]$$

- confection d'un tableau où pour chaque information de débit di et à chaque ligne j on calcule j $\Delta_i$, j $\Delta S$, j $\Delta X$ jusqu'à ce que chaque quantité dépasse une valeur VS :

$$VS = 1 + \varepsilon,$$

- l'accès du multiplex est donné au canal pour les valeurs de i :

$$j \, \Delta_i > kVS + \varepsilon$$

où k est un entier s'incrémentant chaque fois que l'accès est donné au multiplex et où e est une valeur fixe égale, de préférence, à 0.

2. Système de transmission par multiplexage temporel présentant un débit binaire dTDM pour transmettre différents canaux C1, ..., CN ayant respectivement des débits binaires

$$d1, \ \ldots, \ dN \left( \sum_{i=1}^{N} di \leq dTDM \right),$$

avec au moins un dispositif comportant une partie émission (1) formée d'un circuit multiplexeur (18) pour donner d'une part, accès aux données entrantes desdits canaux et d'autre part, accès à des données de service de débit dS sur le multiplex sous la commande d'un premier organe répartiteur de canaux (30) et une partie réception (2) formée d'un circuit démultiplexeur (48) pour fournir des données sortantes desdits canaux à partir dudit multiplex sous la commande d'un deuxième organe répartiteur de canaux (70) synchronisé sur le premier, caractérisé en ce que les organes répartiteurs de canaux (30, 70) sont conçus pour répartir les canaux de la manière suivante en se basant sur un débit dPG qui est le plus grand commun diviseur des débits des données à transmettre, y compris le débit des données de service :

- détermination du ou des plus grands débits dMAX parmi les di et dS,
- calcul d'un incrément $\Delta_I = di/dMAX$,
- détermination d'un débit de bourrage dX :

$$dX = dTDM - \left[ \left( \sum_{i=1}^{N} di \right) + dS \right]$$

- confection d'un tableau où pour chaque information de débit di et à chaque ligne j on calcule j $\Delta_i$, j $\Delta S$, j $\Delta X$ jusqu'à ce que chaque quantité dépasse une valeur VS :

$$VS = 1 + \varepsilon,$$

- l'accès du multiplex est donné au canal pour les valeurs de i :

$$j \, \Delta_i > kVS + \varepsilon$$

où k est un entier s'incrémentant chaque fois que l'accès est donné au multiplex et où ε est une valeur fixe égale, de préférence, à 0.

## Patentansprüche

1.  Anordnung zur Zeitmultiplexing-Übertragung mit einer Bitrate dTDM von mehreren Kanälen C1, ..., CN, die jeweils Bitraten

$$d1, \ \ldots, \ dN \left( \sum_{i=1}^{N} di \leq dTDM \right)$$

haben,

wobei diese Anordnung einen Sendeteil (1) umfaßt, gebildet durch eine Multiplexerschaltung (18), um einerseits den Eingangsdaten der genannten Kanäle und andererseits Dienstdaten der Rate dS Zugang zum Multiplex zu erteilen, gesteuert durch ein erstes Kanalverteilerorgan (30), und einen Empfangsteil (2), gebildet durch eine Demultiplexerschaltung (48), um Ausgangsdaten der genannten Kanäle von dem genannten Multiplex zu liefern, gesteuert durch ein zweites, mit dem ersten synchronisiertes Kanalverteilerorgan (70),

**dadurch gekennzeichnet,**

daß die Kanalverteilerorgane (30, 70) so konzipiert sind, daß sie die Kanäle folgendermaßen verteilen, wobei sie eine Datenrate dPG benutzen, die der größte gemeinsame Divisor der zu übertragenden Datenraten ist, einschließlich der Dienstdatenrate:

-   Bestimmung der größten Datenrate oder Datenraten dMAX unter den di und dS,
-   Berechnung eines Inkrements $\Delta_I = di/dMAX$.
-   Bestimmung einer Füllrate dX:

$$dX = dTDM - \left[ \left( \sum_{i=1}^{N} di \right) + dS \right]$$

-   Erstellung einer Tabelle, wo man für jede Rateninformation di und in jeder Zeile j j $\Delta_i$, j $\Delta S$, j $\Delta X$ berechnet, bis jede Menge einen Wert VS überschreitet:

$$VS = 1 + \varepsilon,$$

-   der Multiplex-Zugang wird dem Kanal erteilt für die i-Werte:

$$j \, \Delta_i > kVS + \varepsilon$$

wo k eine ganze Zahl ist, die sich jedesmal inkrementiert, wenn der Multiplex-Zugang erteilt wird, und wo E ein fester Wert ist, vorzugsweise gleich 0.

2.  System zur Zeitmultiplexing-Übertragung mit einer Bitrate dTDM von mehreren Kanälen C1, ..., CN, die jeweils Bitraten

EP 0 490 440 B1

$$d1, \ldots, dN \left( \sum_{i=1}^{N} di \leq dTDM \right)$$

haben,

wobei diese Anordnung einen Sendeteil (1) umfaßt, gebildet durch eine Multiplexerschaltung (18), um einerseits den Eingangsdaten der genannten Kanäle und andererseits Dienstdaten der Rate dS Zugang zum Multiplex zu erteilen, gesteuert durch ein erstes Kanalverteilerorgan (30), und einen Empfangsteil (2), gebildet durch eine Demultiplexerschaltung (48), um Ausgangsdaten der genannten Kanäle von dem genannten Multiplex zu liefern, gesteuert durch ein zweites, mit dem ersten synchronisiertes Kanalverteilerorgan (70),

**dadurch gekennzeichnet,**

daß die Kanalverteilerorgane (30, 70) so konzipiert sind, daß sie die Kanäle folgendermaßen verteilen, wobei sie eine Datenrate dPG benutzen, die der größte gemeinsame Divisor der zu übertragenden Datenraten ist, einschließlich der Dienstdatenrate:

- Bestimmung der größten Datenrate oder Datenraten dMAX unter den di und dS,
- Berechnung eines Inkrements $\Delta_I = di/dMAX$,
- Bestimmung einer Füllrate dX:

$$dX = dTDM - \left[ \left( \sum_{i=1}^{N} di \right) + dS \right]$$

- Erstellung einer Tabelle, wo man für jede Rateninformation di und in jeder Zeile j j $\Delta_i$, j $\Delta$S, j $\Delta$X berechnet, bis jede Menge einen Wert VS überschreitet:

$$VS = 1 + \varepsilon,$$

- der Multiplex-Zugang wird dem Kanal erteilt für die i-Werte:

$$j \, \Delta_i > kVS + \varepsilon$$

wo k eine ganze Zahl ist, die sich jedesmal inkrementiert, wenn der Multiplex-Zugang erteilt wird, und wo $\varepsilon$ ein fester Wert ist, vorzugsweise gleich 0.

## Claims

1. A time-division multiplex transmission device with a bit rate dTDM for transmitting various channels C1,..., CN having respective bit rates

$$d1, \ldots, dN \left( \sum_{i=1}^{N} di \leq dTDM \right),$$

said device comprising a transmitting section (1) formed by a multiplexer (18) for providing the incoming data of said channels, on the one hand, and service data of rate dS, on the other hand, access to the multiplex line under the control of a first channel splitter (30), and a receiving section (2) formed by a demultiplexer (48) for supplying

9

outgoing data of said channels from said multiplex line under the control of a second channel splitter (70) synchronized with the first splitter, characterized in that the channel splitters (30, 70) are arranged to split the channels in the following manner on the basis of a rate dPG, which is the highest common factor of the rates of data, including the rate of service data, to be transmitted :

- determination of the highest rate(s) dMAX of said di and dS,
- calculation of an increment $\Delta_I = di/dMAX$,
- determination of a jamming rate dX :

$$dX = dTDM - \left[ \left( \sum_{i=1}^{N} di \right) + dS \right]$$

- compilation of a table, in which for each information signal of rate di and for each line j, j $\Delta_i$, j $\Delta S$, j $\Delta X$ are calculated until each quantity exceeds a value VS :

$$VS = 1 + \varepsilon,$$

- access to the multiplex line is granted to the channel for the values of i :

$$j \Delta_i > kVS + \varepsilon$$

where k is an integer incrementing whenever access is granted to the multiplex line and where $\varepsilon$ is a fixed value preferably equal to 0.

2. A time-division multiplex transmission system with a bit rate dTDM for transmitting various channels C1,..., CN having respective bit rates

$$d1, \ldots, dN \left( \sum_{i=1}^{N} di \leq dTDM \right),$$

with at least one device comprising a transmitting section (1) formed by a multiplexer (18) for providing the incoming data of said channels, on the one hand, and service data of rate dS, on the other hand, access to the multiplex line under the control of a first channel splitter (30), and a receiving section (2) formed by a demultiplexer (48) for supplying outgoing data of said channels from said multiplex line under the control of a second channel splitter (70) synchronized with the first splitter, characterized in that the channel splitters (30, 70) are arranged to split the channels in the following manner on the basis of a rate dPG, which is the highest common factor of the rates of data, including the rate of service data, to be transmitted :

- determination of the highest rate(s) dMAX of said di and dS,
- calculation of an increment $\Delta_I = di/dMAX$,
- determination of a jamming rate dX :

$$dX = dTDM - \left[ \left( \sum_{i=1}^{N} di \right) + dS \right]$$

- compilation of a table, in which for each information signal of rate di and for each line j, j $\Delta_i$, j $\Delta$S, j $\Delta$X are calculated until each quantity exceeds a value VS :

$$VS = 1 + \varepsilon,$$

- access to the multiplex line is granted to the channel for the values of i :

$$j \Delta_i > kVS + \varepsilon$$

where k is an integer incrementing whenever access is granted to the multiplex line and where $\varepsilon$ is a fixed value preferably equal to 0.

FIG.1

FIG.2

FIG.3

FIG.4